# EUROPEAN PATENT APPLICATION

(11) **EP 4 099 193 A1**
(43) Date of publication of application: **07.12.2022**
(21) Application number: 22174856.9
(22) Date of filing: 23.05.2022
(51) Int. Cl.: G06F 21/10, G06Q 20/12

(54) **NFT-BASED DIGITAL CONTENT MANAGEMENT SYSTEM AND METHOD**

(30) Priority: 02.06.2021 KR 20210071415
(71) Applicant: Musicow, Inc., Mapo-gu, Seoul 04073 (KR)
(72) Inventor: KIM, Ji Soo, 13836 Gyeonggi-do (KR)
(74) Representative: Hepworth Browne

(57) **Abstract**

Disclosed herein are a digital content management system and method. The digital content management system includes: a digital content information reception unit configured to receive digital content, and the number of pieces of non-fungible token (NFT) content to be generated based on the digital content; a digital content conversion unit configured to generate a number of pieces of NFT digital content equal to the number of pieces of NFT content by converting the digital content; an NFT generation unit configured to generate an NFT based on a blockchain for each of the generated pieces of NFT digital content; and a checking unit configured to, when playing back one of the generated pieces of NFT digital content, check an NFT generated for the NFT digital content to be played back.

## Description

### CROSS-REFERENCE TO RELATED APPLICATION

This application claims under 35 U.S.C. §119(a) the benefit of Korean Patent Application No. 10-2021-0071415 filed on June 2, 2021, which is incorporated herein by reference.

### TECHNICAL FIELD

The present invention relates to a non-fungible token (NFT)-based digital content management system and method, and more particularly to a system for converting digital content into multiple versions of NFT digital content and generating non-fungible tokens (NFTs) for the versions, respectively, thereby allowing owners to be managed and ownership information to be traded.

### BACKGROUND ART

Various types of content such as source sounds, images, and videos have been digitized and distributed as digital content. Such digital content has the characteristics of being easy to copy and share. Due to these characteristics, various methods for managing rights to digital content are being researched.

In general, a technology called digital rights management (DRM) is a technology that allows only an authorized user to use digital content by managing the right to play back the digital content.

Korean Patent No. 10-2142259 entitled "Content File Distribution System and Method Using Blockchain-Based Smart Contract," which is a related art, discloses a technology that allows profits to be created using digital content by managing the trading of the digital content using blockchain technology. Blockchain technology is combined with DRM, so that the more rational and safe management of digital content is possible.

This DRM technology is a technology for managing the right to play back the same content. Recently, a non-fungible token (NFT) technology has been used as a technology that safely manages the ownership of digital content itself as well as the right to play back the digital content. The NFT technology is a technology that allows the legitimate owner of digital content to be identified by issuing a token, which cannot be replaced with another token, for one piece of digital content and then managing a history of changes in the ownership of the token.

However, even when such an NFT is used, only one owner may be present for one piece of digital content, and there is no difference between the owner and a person who does not own a corresponding token in terms of the playback of the digital content, so that there is a limitation on the creation of profits.

### SUMMARY OF THE DISCLOSURE

An object of the present invention is to enable the creation of various profits using digital content by managing one piece of digital content in the form of multiple versions and also managing the owner of each of the versions.

An object of the present invention is to convert digital content into pieces of content having various qualities and to manage owner information for each of the generated pieces of content.

An object of the present invention is to maximize the desire to own digital content by managing owner information for each of a plurality of pieces of digital content having various qualities and allowing only the owner of a corresponding version to play back the digital content of the corresponding version.

An object of the present invention is to enable the active distribution of digital content by allowing the ownership of each of various versions of digital content to be traded separately.

According to an aspect of the present invention, there is provided a digital content management system including: a digital content information reception unit configured to receive digital content, and the number of pieces of non-fungible token (NFT) content to be generated based on the digital content; a digital content conversion unit configured to generate a number of pieces of NFT digital content equal to the number of pieces of NFT content by converting the digital content; an NFT generation unit configured to generate an NFT based on a blockchain for each of the generated pieces of NFT digital content; and a checking unit configured to, when playing back one of the generated pieces of NFT digital content, check an NFT generated for the NFT digital content to be played back.

The digital content conversion unit may be further configured to convert the digital content so that the generated pieces of NFT digital content have different qualities, respectively.

The digital content may be source sound content; and each of the generated pieces of NFT digital content may be generated by shortening the playback time of the digital content.

The digital content management system may further include a digital content playback unit configured to receive an NFT digital content playback command from a user, to check the owner of an NFT for NFT digital content corresponding to the playback command via the checking unit, and to play back the NFT digital content corresponding to the playback command only when the owner matches the user.

The digital content management system may further include a digital content storage unit configured to store the pieces of NFT digital content generated by the digital content conversion unit, and the digital content playback unit may be further configured to search for the NFT digital content corresponding to the playback command in the digital content storage unit and to play back the retrieved NFT digital content.

The digital content management system may further include a token trading unit configured to allow the NFT generated for each of the generated pieces of NFT digital content to be traded and to include a history of the trading in the generated NFT.

### BRIEF DESCRIPTION OF THE DRAWINGS

The above and other objects, features and advantages of the present invention will be more clearly understood from the following detailed description taken in conjunction with the accompanying drawings, in which:
FIG. 1 is a block diagram showing the internal configuration of a digital content management system according to an embodiment of the present invention;
FIG. 2 is a diagram showing an example of converting digital content into pieces of NFT digital content having various qualities in a digital content management system according to an embodiment of the present invention;
FIG. 3 is a diagram showing an example of a case in which a user who has an NFT for one of a plurality of pieces of NFT digital content plays back the corresponding content; and
FIG. 4 is a flowchart showing the flow of a digital content management method according to an embodiment of the present invention.

### DETAILED DESCRIPTION OF THE DISCLOSURE

Embodiments of the present invention will be described in detail below with reference to the accompanying drawings. In the following description of the present invention, when it is determined that a detailed description of a related known configuration or function may obscure the gist of the present invention, it will be omitted. In addition, in the description of the embodiments of the present invention, specific numerical values are merely examples, and the scope of the invention is not limited thereby.

A digital content management system according to the present invention may be configured in the form of a server that has a central processing unit (CPU) and memory and is connectable to another terminal over a communication network such as the Internet. However, the present invention is not limited by the configurations of the CPU and the memory. In addition, the digital content management system according to the present invention may be physically constructed as one apparatus, or may be implemented in a distributed form among a plurality of apparatuses.

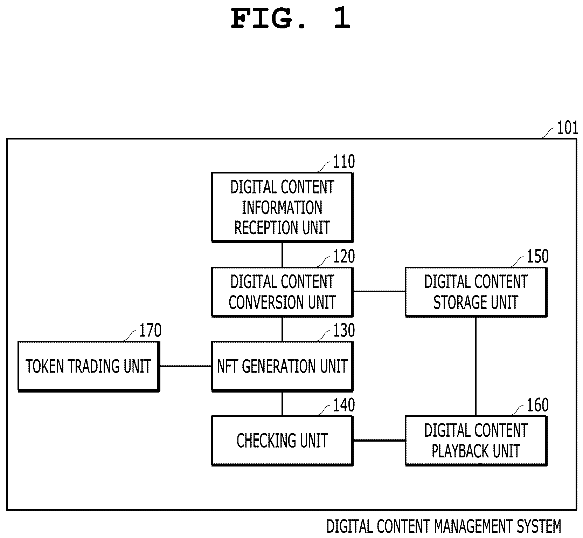

FIG. 1 is a block diagram showing the internal configuration of a digital content management system 101 according to an embodiment of the present invention.

As shown in the drawing, the digital content management system 101 according to the present embodiment may include a digital content information reception unit 110, a digital content conversion unit 120, an NFT generation unit 130, a checking unit 140, a digital content storage unit 150, a digital content playback unit 160, and a token trading unit 170. Each of the components may be a software module that operates within the physically same computer system, and may be configured such that it is executed by two or more physically separated computer systems operating in conjunction with each other. Various embodiments including the same function are embraced within the scope of the present invention.

The digital content information reception unit 110 receives digital content, and the number of pieces of NFT content to be generated based on the digital content. The present invention is characterized by converting each of various types of digital content into various versions and also allowing an owner to be identified for each of the versions. The digital content may include a source sound, an image, a video, and/or the like. The source sound may be in the form of a file in which a source sound such as MP3 data is compressed and stored, the image may be in the form of a file in which an image such as JPEG, GIF or PNG data is compressed and stored, and the video may be in the form of a file in which a video such as MP4 or AVI data is compressed and stored. In addition, all types of content that can be stored in digital forms, such as text-type document files, may be targets for the present invention.

The number of pieces of NFT content to be generated, which is received by the digital content information reception unit 110, indicates the types of versions into which the received digital content will be converted, as described above. For example, when the number of pieces of NFT content to be generated is 10, a total of 10 versions of the digital content may be generated through the conversion. One of these versions of the digital content may be the received original digital content, and the others may be the pieces of content into which the original digital content is converted. In some cases, all the versions of the digital content may be pieces of content stored in different manners than the original digital content.

The digital content information reception unit 110 may receive the digital content and information about the number of pieces of NFT content to be generated from an owner who owns the original digital content. Through this, the ownership of the NFT digital content generated through the conversion may also be primarily vested in the owner of the original digital content.

The digital content conversion unit 120 generates a number of pieces of NFT digital content equal to the received number of pieces of NFT content by converting the digital content. As described above, the digital content is converted based on information about the number of pieces of NFT content received by the digital content information reception unit 110, and one of various conversion methods may be applied according to the type of digital content.

In this case, the digital content conversion unit 120 converts the digital content so that the generated pieces of NFT digital content have different qualities, respectively. An NFT technology enables the safe and transparent management of ownership information for each piece of digital content by using a blockchain. When the NFT technology is employed, only one owner is allowed for one piece of digital content, so that the number of pieces of distributable content is limited, thereby making it difficult to perform active trading and create profits.

Therefore, the digital content conversion unit 120 is characterized by converting one piece of digital content into various versions and then allowing the various versions to be separately traded. The plurality of pieces of NFT digital content may have slightly different qualities than the original digital content, so that they can be traded at different prices in the market. It is desirable that the original digital content be converted such that at least part thereof can be used, although there is a difference in quality between the original digital content and each of the plurality of pieces of NFT digital content.

For example, the digital content converted by the digital content conversion unit 120 may be source sound content, and each of the generated pieces of NFT digital content may be content generated by shortening the playback time of the digital content. In the case where an author desires to manage the ownership of a source sound that has not yet been released, when original digital content contains an overall source sound for overall playback time, a first piece of NFT digital content generated through conversion may be in a form from which a part for a last 10 seconds has been removed, and a second piece of NFT digital content generated through conversion may be in a form from which a part for a last 20 seconds has been removed. By adjusting the quality of digital content gradually in this manner, generated pieces of NFT digital content may be allowed to have relatively different values, and may be traded at different prices in the market.

In addition, in some cases, an overall 3-minute (180-second) source sound may be divided into 10 versions, and may be divided and implemented such that each piece of resulting digital content has a 18-second playback time. In this case, the part that is preferred by the public may be identified through information such as the prices of the ownership of pieces of NFT digital content being traded and more active trades may be promoted to own the overall source sound, so that the creation of profits through the trading of the ownership can be maximized.

As another example, when original digital content converted by the digital content conversion unit 120 is video content, pieces of NFT digital content may be generated by converting the original digital content so that the pieces of NFT digital content have various resolutions. Through this, a relatively high price may be put on digital content having an original resolution and trade may be made at a low price due to the deterioration of quality attributable to a reduction in resolution, so that various types of trading can be made in the market.

The NFT generation unit 130 generates an NFT for each of the generated pieces of NFT digital content based on a blockchain. An NFT configured to allow owner information to be identified for one piece of digital content may be generated using blockchain technology. Information about a history of changes in ownership may be stored in this token, and an owner may be clearly identified without centralized management according to the characteristics of the decentralized blockchain technology.

The NFT generation unit 130 generates a token for each of the pieces of NFT digital content, so that the owners of the respective pieces of NFT digital content can be managed separately and the individual pieces of NFT digital content can be traded separately. When the number of pieces of NFT digital content generated through conversion for one piece of digital content is 10, 10 non-fungible tokens (NFTs) are also generated.

The NFT generation unit 130 may generate tokens so that the owner of the original digital content is registered as the owner of all the generated pieces of NFT digital content. Through this, a first owner, such as the author of digital content, may convert his or her digital content into various versions, may possess the ownership of each of the versions, and may create profits by selling some or all of them in the market.

When each of the generated pieces of NFT digital content is played back, the checking unit 140 checks an NFT generated for the NFT digital content to be played back. NFT technology allows the owner of digital content to be identified, and does not manage the right to play back the corresponding digital content. Accordingly, in the digital content management system of the present invention, control may be performed such that the owner of each piece of digital content can be checked upon playback of the digital content and only the owner can be allowed to play back the digital content or such that information about the owner of digital content can also be output upon playback of the digital content.

The checking unit 140 may check the NFT corresponding to the NFT digital content to be played back, and may then check whether a final owner recorded in the token is the same as a user who requested the playback of the content. To this end, the checking unit 140 may request information such as a password from the user who requested the playback of the content in order to check whether the user is the same as an owner recorded in the corresponding token. When a user has subscribed to the content management system 101 of the present invention, information that can be checked by being matched against the user of the token is stored as user information, so that the content can be played back without unnecessarily requesting checking information whenever the user requests the playback of the content.

The digital content storage unit 150 stores the pieces of NFT digital content generated through conversion by the digital content conversion unit 120. As described above, the digital content may include various types of content, but is ultimately stored in the form of a digital file. Accordingly, a digital file in which the information of digital content is stored may be stored in a storage medium, and generated pieces of NFT digital content may be played back in response to a user's request. There may be several methods for storing NFT digital content. It is preferable that content security technology capable of preventing the divulgence of content be applied.

The digital content playback unit 160 receives an NFT digital content playback command from the user, checks the owner information of an NFT for NFT digital content corresponding to the playback command via the checking unit 140, and plays back the NFT digital content corresponding to the playback command only when the owner matches the user. As described above, the checking unit 140 may check who the owner of an NFT for each piece of NFT digital content is, and may check whether the owner is the same as the user who requested the playback of the NFT digital content.

The digital content playback unit 160 may include a playback module including a decoder capable of playing back images, source sounds, videos, etc. in order to play back digital content. Via this, various types of NFT digital content may be played back. In this case, the digital content playback unit 160 may apply various DRM technologies to prevent digital content from being divulged to the outside, but the present invention is not limited by the DRM technologies. As the digital content playback unit 160 safely manages corresponding NFT digital content so that users other than the owner cannot play back the NFT digital content, the value of an NFT for the NFT digital content may further increase.

The digital content playback unit 160 retrieves the NFT digital content corresponding to the playback command from the digital content storage unit 150, and plays back it. As described above, the generated pieces of NFT digital content are stored in the digital content storage unit 150 in a form that can be played back, and are then played back by the digital content playback unit 160. Accordingly, an effect may be achieved in that even when a user does not possess corresponding digital content in the form of a file or the like in a terminal, the corresponding content can be used at any time through the digital content management system 101 of the present invention.

The token trading unit 170 enables an NFT generated for each piece of NFT digital content to be traded, and includes a history of the trading in the generated NFT. The token trading unit 170 may provide a user interface (UI) in the form of an exchange so that a generated NFT can be traded, and may change owner information by using blockchain technology when a trade is concluded and also payment is made. Due to the nature of blockchain technology, information about trading history may be maintained. Accordingly, this enables the continuous management of information about the time when and the person to whom the corresponding NFT digital content is transferred. Furthermore, this may make it possible to safely manage the rights to each piece of NFT digital content.

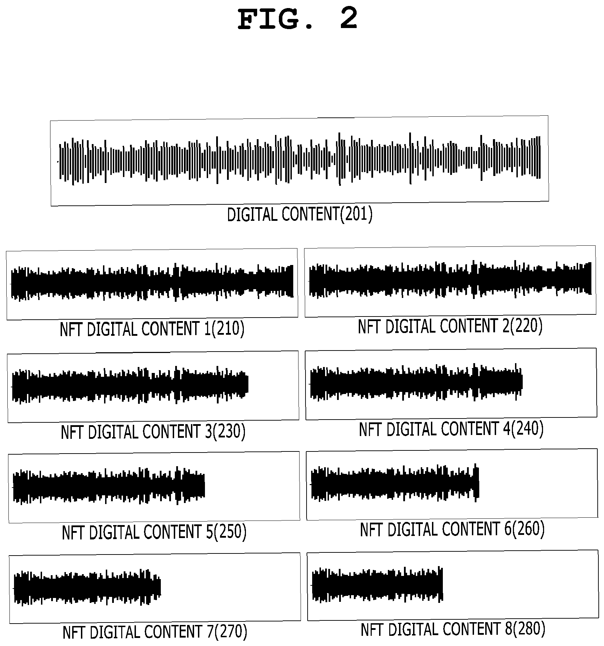

FIG. 2 is a diagram showing an example of converting digital content into pieces of NFT digital content having various qualities in a digital content management system according to an embodiment of the present invention.

In this example, a case where original digital content 201 is source sound content is taken as an example, and a total of eight pieces of digital content are generated by converting the original digital content. As shown in the drawing, eight pieces of NFT digital content 210 to 280 may be generated. In this case, as shown in the drawing, a first piece of NFT digital content 210 may be the same digital content as the original digital content, and second to eighth pieces of NFT digital content 220 to 280 may be pieces of digital content each in a form in which a part of the second half of an original source sound has been removed.

Through this conversion, various types of NFT digital content having different qualities may be generated, and an NFT may be generated for each piece of NFT digital content so that an owner can be managed, thereby allowing various types of content trade to be made.

Although the example of generating pieces of content having various qualities by adjusting the length of a source sound to be played back has been given in the drawing, various modifications, such as converting the sound quality of the source sound or equally splitting the source sound to generate different types of content, may be made.

Furthermore, an implementation may be made such that a source sound for the pre-listening of the front part of the source sound may also be additionally generated in addition to the pieces of digital content of the drawing and this part may be played back without the acquisition of a separate ownership, thereby helping with trading.

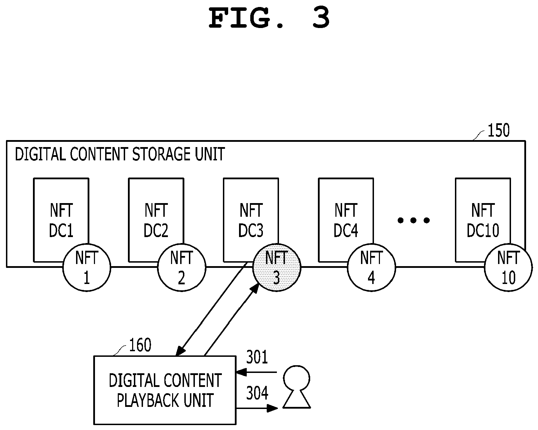

FIG. 3 is a diagram showing an example of a case in which a user who has an NFT for one of a plurality of pieces of NFT digital content plays back the corresponding content.

The example of the drawing shows a case in which a user requests the playback of No. 3 NFT digital content in a situation in which the user owns an NFT (NFT3) corresponding to No. 3 NFT digital content (NFT DC3).

When the user requests the playback of the content from the digital content playback unit 160 of the digital content management system 101 of the present invention as indicated by reference symbol 301, the digital content playback unit 160 identifies the current owner of the NFT (NFT3) by checking the corresponding token as indicated by reference symbol 302. When the owner of the corresponding token is identified and is also determined to be the same as the user who requested playback, the digital content playback unit 160 reads the corresponding content (NFT DC3) stored in the digital content storage unit 150 as indicated by reference symbol 303, and plays back the corresponding content (NFT DC3) to the user as indicated by reference symbols 304.

The user who possesses the NFT digital content generated through conversion by the above process may play back the digital content through the digital content management system 101 of the present invention without storing the digital content in his/her terminal or the like, and may block other persons from playing back it.

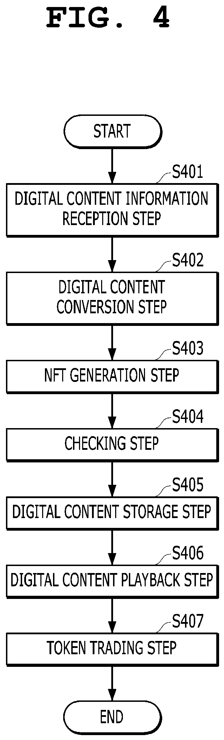

FIG. 4 is a flowchart showing the flow of a digital content management method according to an embodiment of the present invention.

The digital content management method according to the present invention is a method for managing digital content in the digital content management system 101 having a central processing unit (CPU) and memory, and may be driven in such a computing system.

Accordingly, the digital content management method may include all the characteristic components described in conjunction with the above-described digital content management system described above, and items not described in the description below may be implemented with reference to the description of the digital content management system given above.

In a digital content information reception step S401, digital content and the number of pieces of NFT content to be generated based on the digital content are received. The present invention is characterized by converting each of various types of digital content into various versions and also allowing an owner to be identified for each of the versions. The digital content may include a source sound, an image, a video, and/or the like. The source sound may be in the form of a file in which a source sound such as MP3 data is compressed and stored, the image may be in the form of a file in which an image such as JPEG, GIF or PNG data is compressed and stored, and the video may be in the form of a file in which a video such as MP4 or AVI data is compressed and stored. In addition, all types of content that can be stored in digital forms, such as text-type document files, may be targets for the present invention.

The number of pieces of NFT content to be generated, which is received in the digital content information reception step S401, indicates the types of versions into which the received digital content will be converted, as described above. For example, when the number of pieces of NFT content to be generated is 10, a total of 10 versions of the digital content may be generated through the conversion. One of these versions of the digital content may be the received original digital content, and the others may be the pieces of content into which the original digital content is converted. In some cases, all the versions of the digital content may be content stored differently from the original digital content.

In a digital content conversion step S402, a number of pieces of NFT digital content equal to the received number of pieces of NFT content are generated by converting the digital content. As described above, the digital content is converted based on information about the number of pieces of NFT content received in the digital content information reception step S401, and one of various conversion methods may be applied according to the type of digital content.

In this case, in the digital content conversion step S402, the digital content is converted such that the generated pieces of NFT digital content have different qualities, respectively. An NFT technology enables the safe and transparent management of ownership information for each piece of digital content by using a blockchain. When the NFT technology is employed, only one owner is allowed for one piece of digital content, so that the number of pieces of distributable content is limited, thereby making it difficult to perform active trading and create profits.

Therefore, the digital content conversion step S402 is characterized by converting one piece of digital content into various versions and then allowing the various versions to be separately traded. The plurality of pieces of NFT digital content may have slightly different qualities than the original digital content, so that they can be traded at different prices in the market. It is desirable that the original digital content be converted such that at least part thereof can be used, although there is a difference in quality between the original digital content and each of the plurality of pieces of NFT digital content.

For example, the digital content converted in the digital content conversion step S402 may be source sound content, and each of the generated pieces of NFT digital content may be content generated by shortening the playback time of the digital content. In the case where an author desires to manage the ownership of a source sound that has not yet been released, when original digital content contains an overall source sound for overall playback time, a first piece of NFT digital content generated through conversion may be in a form from which a part for a last 10 seconds has been removed, and a second piece of NFT digital content generated through conversion may be in a form from which a part for a last 20 seconds has been removed. By adjusting the quality of digital content gradually in this manner, generated pieces of NFT digital content may be allowed to have relatively different values, and may be traded at different prices in the market.

In an NFT generation step S403, an NFT is generated for each of the generated pieces of NFT digital content based on a blockchain. An NFT configured to allow owner information to be identified for one piece of digital content may be generated using blockchain technology. Information about a history of changes in ownership may be stored in this token, and an owner may be clearly identified without centralized management according to the characteristics of the decentralized blockchain technology.

In the NFT generation step S403, a token is generated for each of the pieces of NFT digital content, so that the owners of the respective pieces of NFT digital content can be managed separately and the individual pieces of NFT digital content can be traded separately. When the number of pieces of NFT digital content generated through conversion for one piece of digital content is 10, 10 non-fungible tokens (NFTs) are also generated.

In the NFT generation step S403, tokens may be generated such that the owner of the original digital content is registered as the owner of all the generated pieces of NFT digital content. Through this, a first owner, such as the author of digital content, may convert his or her digital content into various versions, may possess the ownership of each of the versions, and may create profits by selling some or all of them in the market.

In a checking step S404, when each of the generated pieces of NFT digital content is played back, an NFT generated for the NFT digital content to be played back is checked. NFT technology allows the owner of digital content to be identified, and does not manage the right to play back the corresponding digital content. Accordingly, in the digital content management system of the present invention, control may be performed such that the owner of each piece of digital content can be checked upon playback of the digital content and only the owner can be allowed to play back the digital content or such that information about the owner of digital content can also be output upon playback of the digital content.

In the checking step S404, the NFT corresponding to the NFT digital content to be played back may be checked, and whether a final owner recorded in the token is the same as a user who requested the playback of the content may then be checked. To this end, in the checking step S404, information such as a password may be requested from the user who requested the playback of the content in order to check whether the user is the same as the owner recorded in the corresponding token. When a user has subscribed to the content management system 101 of the present invention, information that can be checked by being matched against the user of a token is stored as user information, so that the content can be played back without unnecessarily requesting checking information whenever the user requests the playback of the content.

In a digital content storage step S405, the pieces of NFT digital content generated through conversion in the digital content conversion step S402 are stored in the digital content storage unit 150. As described above, digital content may include various types of content, but is ultimately stored in the form of a digital file. Accordingly, a digital file in which the information of digital content is stored may be stored in a storage medium, and generated pieces of NFT digital content may be played back in response to a user's request. There may be several methods for storing NFT digital content. It is preferable that content security technology capable of preventing the divulgence of content be applied.

In a digital content playback step S406, an NFT digital content playback command is received from the user, the owner information of an NFT for NFT digital content corresponding to the playback command is checked in the checking step S404, and the NFT digital content corresponding to the playback command is played back only when the owner matches the user. As described above, in the checking step S404, who the owner of an NFT for each piece of NFT digital content is may be checked, and whether the owner is the same as the user who requested the playback of the NFT digital content may then be checked.

In the digital content playback step S406, a playback module including a decoder capable of playing back images, source sounds, videos, etc. may be employed to play back digital content. Via this, various types of NFT digital content may be played back. In this case, various DRM technologies may be applied to the digital content playback step S406 in order to prevent digital content from being divulged to the outside, but the present invention is not limited by the DRM technologies. In the digital content playback step S406, as corresponding NFT digital content is safely managed such that users other than the owner cannot play back the NFT digital content, the value of an NFT for the NFT digital content may further increase.

In the digital content playback step S406, the NFT digital content corresponding to the playback command is retrieved from the digital content storage unit 150, and is played back. As described above, the generated pieces of NFT digital content are stored in the digital content storage unit 150 in a form that can be played back, and are then played back in the digital content playback step S406. Accordingly, an effect may be achieved in that even when a user does not possess corresponding digital content in the form of a file or the like in a terminal, the corresponding content can be used at any time through the digital content management system 101 of the present invention.

In a token trading step S407, an NFT generated for each piece of NFT digital content is enabled to be traded, and a history of the trading is included in the generated NFT. In the token trading step S407, a user interface (UI) may be provided in the form of an exchange so that a generated NFT can be traded, and owner information may be changed by using blockchain technology when a trade is concluded and also payment is made. Due to the nature of blockchain technology, information about trading history may be maintained. Accordingly, this enables the continuous management of information about the time and person when and to whom the corresponding NFT digital content is transferred. Furthermore, this may make it possible to safely manage the rights to each piece of NFT digital content.

The digital content management method according to the present invention may be produced as a program for causing a computer to execute the digital content management method and recorded on a computer-readable storage medium.

Examples of the computer-readable storage medium include magnetic media such as a hard disk, a floppy disk and a magnetic tape, optical storage media such as CDROM and DVD, magnetooptical media such as a floptical disk, and hardware devices specially configured to store and execute program instructions such as ROM, RAM and flash memory.

Examples of the program instructions include not only machine language codes such as those that are generated by a compiler, but also high-level language codes that can be executed by a computer using an interpreter or the like. The hardware devices may be each configured to operate as one or more software modules for performing processing according to the present invention, and vice versa.

According to the present invention, there is the advantage of enabling the creation of various profits using digital content by managing one piece of digital content in the form of multiple versions and also managing the owner of each of the versions.

According to the present invention, there is the advantage of converting digital content into pieces of content having various qualities and to manage owner information for each of the generated pieces of content.

According to the present invention, there is the advantage of maximizing the desire to own digital content by managing owner information for each of a plurality of pieces of digital content having various qualities and allowing only the owner of a corresponding version to play back the digital content of the corresponding version.

According to the present invention, there is the advantage of enabling the active distribution of digital content by allowing the ownership of each of various versions of digital content to be traded separately.

Although the above description has been given with reference to the embodiments, those skilled in the art can variously modify and change the present invention within the scope without departing from the spirit and scope of the present invention described in the attached claims.

## Claims

1. A digital content management system comprising:
a digital content information reception unit configured to receive digital content, and a number of pieces of non-fungible token (NFT) content to be generated based on the digital content;
a digital content conversion unit configured to generate a number of pieces of NFT digital content equal to the number of pieces of NFT content by converting the digital content;
an NFT generation unit configured to generate an NFT based on a blockchain for each of the generated pieces of NFT digital content; and
a checking unit configured to, when playing back one of the generated pieces of NFT digital content, check an NFT generated for the NFT digital content to be played back.

2. The digital content management system of claim 1, wherein the digital content conversion unit is further configured to convert the digital content so that the generated pieces of NFT digital content have different qualities, respectively.

3. The digital content management system of claim 2, wherein:
the digital content is source sound content; and
each of the generated pieces of NFT digital content is generated by shortening a playback time of the digital content.

4. The digital content management system of any preceding claim, further comprising a digital content playback unit configured to receive an NFT digital content playback command from a user, to check an owner of an NFT for NFT digital content corresponding to the playback command via the checking unit, and to play back the NFT digital content corresponding to the playback command only when the owner matches the user.

5. The digital content management system of claim 4, further comprising a digital content storage unit configured to store the pieces of NFT digital content generated by the digital content conversion unit;
wherein the digital content playback unit is further configured to search for the NFT digital content corresponding to the playback command in the digital content storage unit and to play back the retrieved NFT digital content.

6. The digital content management system of any preceding claim, further comprising a token trading unit configured to allow the NFT generated for each of the generated pieces of NFT digital content to be traded and to include a history of the trading in the generated NFT.

7. A digital content management method, the digital content management method being performed by a digital content management system having a central processing unit (CPU) and memory, the digital content management method comprising:
a digital content information reception step of receiving digital content, and a number of pieces of non-fungible token (NFT) content to be generated based on the digital content;
a digital content conversion step of generating a number of pieces of NFT digital content equal to the number of pieces of NFT content by converting the digital content;
an NFT generation step of generating an NFT based on a blockchain for each of the generated pieces of NFT digital content; and
a checking step of, when playing back one of the generated pieces of NFT digital content, checking an NFT generated for the NFT digital content to be played back.

8. The digital content management method of claim 7, wherein the digital content conversion step comprises converting the digital content so that the generated pieces of NFT digital content have different qualities, respectively.

9. The digital content management method of claim 8, wherein:
the digital content is source sound content; and
each of the generated pieces of NFT digital content is generated by shortening a playback time of the digital content.

10. The digital content management method of any one of claims 7 to 9, further comprising a digital content playback step of receiving an NFT digital content playback command from a user, checking an owner of an NFT for NFT digital content corresponding to the playback command in the checking step, and playing back the NFT digital content corresponding to the playback command only when the owner matches the user.

11. The digital content management method of claim 10, further comprising a digital content storage step of storing the pieces of NFT digital content generated in the digital content conversion step in a digital content storage unit;
wherein the digital content playback step comprises searching for the NFT digital content corresponding to the playback command in the digital content storage unit and playing back the retrieved NFT digital content.

12. The digital content management method of anyone of claims 7 to 11, further comprising a token trading step of allowing the NFT generated for each of the generated pieces of NFT digital content to be traded and including a history of the trading in the generated NFT.

13. A non-transitory computer-readable storage medium having stored thereon a computer program that, when executed by a processor, causes the processor to execute the method of any one of claims 7 to 12.
